# FASCICULE DE BREVET EUROPEEN

(11) **EP 0 632 196 B1**
(45) Date de publication et mention de la délivrance du brevet: **16.08.2001**
(21) Numéro de dépôt: 94401390.3
(22) Date de dépôt: 22.06.1994
(51) Int. Cl.: F02K 1/60

(54) **Inverseur de poussée de turboréacteur à obstacle aval à refroidissement aérodynamique**
Aerodynamische Kühlung einer Schubumkehrvorrichtung eines Strahltriebwerkes
Jet engine thrust reverser with aerodynamic cooling

(30) Priorité: 23.06.1993 FR 9307607
(43) Date de publication de la demande: 04.01.1995
(73) Titulaire: HISPANO-SUIZA AEROSTRUCTURES, 76700 Gonfreville l'Orcher (FR)
(72) Inventeur: Lebrun, Bertrand, F-94300 Vincennes (FR); Lecossais, Eric, F-76110 Virville (FR); Lemay, Henriette Silvie, F-76600 Le Havre (FR); Metezeau, Fabrice, F-76600 Le Havre (FR); Valleroy, Laurent Georges, F-76600 Le Havre (FR)
(74) Mandataire: Berrou, Paul

(56) Documents cités:
- EP-A- 0 534 815
- FR-A- 1 542 477
- FR-A- 2 197 115
- FR-A- 2 456 216
- FR-A- 2 551 132
- GB-A- 1 542 642
- US-A- 2 847 823
- US-A- 3 660 982

## Description

La présente invention concerne un inverseur de poussée à obstacle aval destiné à être installé sur des moteurs d'avions de type turboréacteur à double flux.

Ce type de turboréacteur est composé en sortie d'un canal central émettant un flux de gaz chaud entouré par un canal annulaire émettant un flux d'air relativement froid.

La tuyère centrale du canal chaud peut être équipée d'un mélangeur permettant le mélange des gaz sortant dudit canal central et du canal annulaire.

En position déployée, les obstacles de l'inverseur à obstacle aval viennent se placer à l'arrière du turboréacteur de manière à dévier les flux de gaz sortant du canal central et du canal annulaire. La température des obstacles impactés par ce mélange de gaz chauds et froids peut alors atteindre par endroit des valeurs relativement élevées.

Pour supporter ces températures, on doit mettre en oeuvre des solutions technologiquement et matériellement coûteuses.

La présente invention a pour objet de remédier à cet inconvénient. Elle vise à abaisser la température des obstacles de manière à ce que les matériaux légers tels que les alliages d'aluminium et éventuellement les matériaux composites courants puissent être utilisés.

On a remarqué que, dans l'écoulement créé lors de l'inversion, le flux d'air froid éjecté par le canal annulaire entoure dans une certaine mesure le flux de gaz chaud éjecté par le canal central. Ce phénomène a pour effet de protéger en partie les obstacles d'inverseur de l'impact desdits gaz chauds.

Cherchant à amplifier et stabiliser ce phénomène, quelques solutions ont déjà été proposées :
- GB-A 1.542.642 constatant le phénomène de canalisation du flux des gaz chauds par le flux d'air froid propose de placer une petite paroi dans le fond de l'inverseur, dans l'axe d'éjection des gaz. Cette paroi est destinée à recevoir l'impact du flux chaud et à l'inverser, juste après la sortie de la tuyère moteur.
   Malheureusement, les points chauds relevés sur les obstacles sont situés vers l'extérieur des obstacles et non au centre de l'inverseur. L'action de la solution proposée n'est donc pas localisée sur les zones que l'on cherche à refroidir.
- FR A-2.456.216 propose d'augmenter le rapport des pressions totales flux d'air froid sur flux de gaz chauds en plaçant des volets mobiles dans le canal annulaire froid pendant la phase d'inversion de flux. Ils utilisent le fait que lorsque le rapport des pressions totales entre le flux froid et le flux chaud est supérieur à 1,2, le flux d'air froid enveloppe complètement le flux chaud qui ne vient plus lécher la paroi interne des obstacles de l'inverseur. Au régime moteur standard en phase de réverse, ce rapport est normalement de l'ordre de 1,1. Avec leur mécanisme, ils obtiennent un rapport plus élevé de l'ordre de 1,2.
   Si cette solution permet effectivement de préserver les obstacles d'inverseur de l'impact du flux chaud, elle présente l'inconvénient de modifier le point de fonctionnement du moteur ce qui peut entraîner son arrêt brutal (phénomène de pompage). Une efficacité suffisante n'est pas obtenue lorsque le rapport de pression totale du flux froid sur le flux chaud est inférieur à 1,2.
- FR-A 2.551.132 prévoit d'inhiber les moyens de mélange des flux afin de protéger les obstacles d'inverseur de l'action du flux chaud.

On a envisagé une autre approche du problème, basé sur le fait que le flux des gaz chauds vient impacter les obstacles parce que le flux froid faisant office de matelas protecteur peut se dérober en certains points des obstacles sous la pression exercée par ledit flux chaud.

Pour comprendre le mécanisme de l'impact du flux de gaz chauds sur les obstacles, une analyse fine de l'écoulement inversé est nécessaire.

Le flux froid sortant par les côté gauche et droite du canal annulaire vient tapisser la paroi interne de l'inverseur, et le flux chaud sortant du canal central, avec une pression totale plus faible que le flux froid, vient s'écraser sur ce matelas sans le traverser. Les obstacles ne sont donc pas impactés par le flux chaud dans la zone centrale de l'inverseur. Ensuite ce double flux chaud-froid s'écoulant vers l'extérieur des obstacles croise le flux froid sortant par les côtés supérieur et inférieur du canal annulaire.

Ce flux froid transverse va écraser le flux chaud et le rabattre contre la porte. Le matelas d'air froid alors présent entre l'air chaud et la porte va être également écrasé et écarté, permettant le contact entre le flux chaud et l'obstacle: Ceci explique que les zones chaudes sont plutôt localisées vers l'extérieur des obstacles.

Le but de l'invention est de guider aérodynamiquement le flux d'air froid le long de la paroi interne des obstacles de telle sorte que le matelas qu'il forme soit maintenu dans les zones où il se dérobe normalement. Cet effet est réalisable, même pour des rapports de pressions totales inférieurs à 1,2.

Cette méthode permet de pallier les inconvénients des solutions déjà proposées :
- on peut agir directement à l'endroit des zones chaudes des obstacles,
- on ne modifie pas le mode de fonctionnement du moteur défini par le motoriste.

La présente invention a pour objet les différentes solutions technologiques basées sur ce principe.

On connaît par ailleurs, par US-A-3 660 982, un inverseur de poussée de turboréacteur à double flux comportant au moins deux obstacles aval du type précité, lesdits obstacles comportant des moyens de guidage aérodynamique d'une couche d'air froid entrant en contact avec ledit obstacle, constitués par des déflecteurs escamotables disposés sur la face interne desdits obstacles aval de telle sorte que, en configuration de poussée directe, les déflecteurs sont rentrés dans un logement ménagé dans la paroi de l'obstacle de manière à ne pas perturber les écoulements aérodynamiques de flux et, en configuration d'inversion de poussée, lesdits déflecteurs sont sortis et agissent sur l'écoulement le long de la paroi interne des obstacles.

Un inverseur de poussée de turboréacteur du type précité permettant de satisfaire les buts de l'invention est caractérisé en ce que les dimensions et la position des déflecteurs sortis sont déterminées de manière à canaliser le flux froid en évitant l'impact du flux chaud sur les obstacles et en ce qu'un axe de rotation des obstacles porte un levier fixe par rapport à la structure du turboréacteur, relié à une première bielle actionnant un renvoi dont l'autre extrémité actionne une deuxième bielle reliée audit déflecteur escamotable de telle sorte que le déplacement de l'obstacle entraîne celui desdits déflecteurs associés.

Les déflecteurs sont rentrés en position de vol et sont sortis uniquement lors de la phase de réverse. Cela permet de dégager le canal d'air froid de tout obstacle lorsque les obstacles sont placés en position de vol. On s'affranchit ainsi du problème d'encombrement des déflecteurs et il devient possible de les placer pratiquement en n'importe quel point de l'obstacle. On dispose ainsi d'une certaine souplesse pour optimiser leur position.

D'autres caractéristiques et avantages de l'invention seront mieux compris à la lecture de la description qui va suivre de modes de réalisation de l'invention, en référence aux dessins annexés sur lesquels :
- la figure 1 est un schéma global de l'écoulement des flux en phase d'inversion de poussée d'un turboréacteur à double flux,
- la figure 2 est une vue en coupe dans le plan vertical de l'écoulement correspondant à la figure 1,
- la figure 3 est une vue schématique des zones chaudes des obstacles d'inverseur,
- la figure 4 représente selon une vue schématique les obstacles d'inverseur en position déployée suivant un mode de réalisation à déflecteurs escamotables, conforme à l'invention,
- la figure 5 représente selon une vue partielle schématique en coupe suivant la ligne V-V de la figure 4, le système de déplacement des déflecteurs,
- la figure 6 représente selon une vue partielle schématique en coupe par un plan passant par les pivots d'obstacles, le système de déplacement des déflecteurs, en position escamotée.

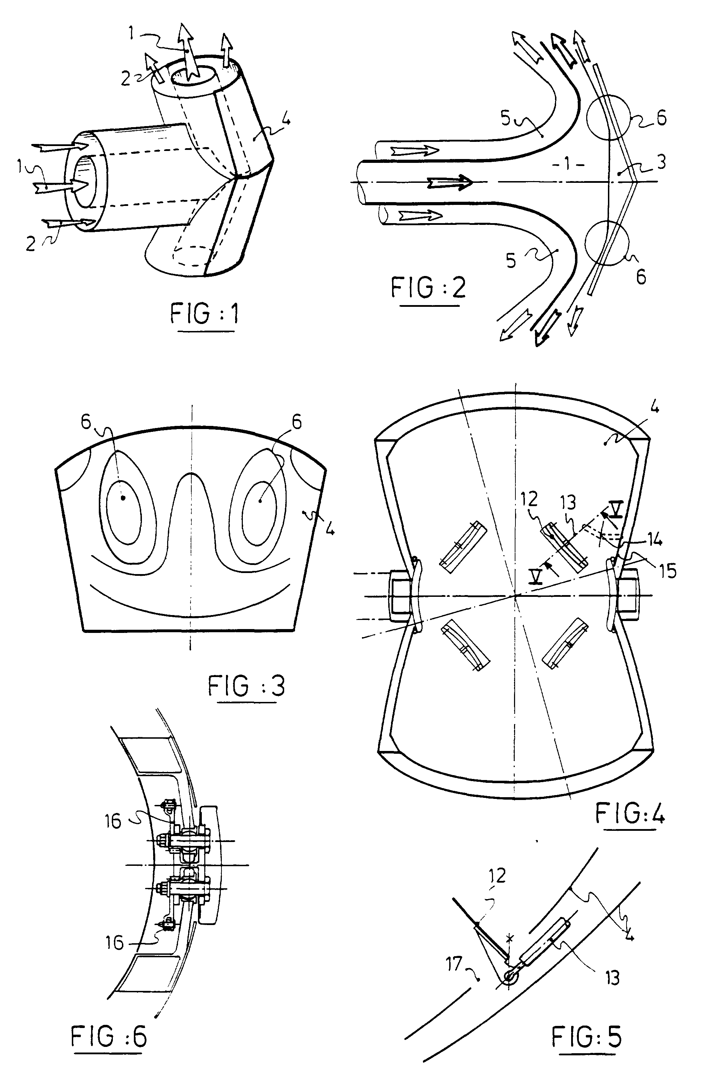

Sur la figure 1, on voit comment le flux chaud symbolisé par la flèche 1 est entouré par le flux froid symbolisé par la flèche 2 lors de la phase d'inversion de l'écoulement d'un turboréacteur à double flux.

Le matelas 3 d'air froid qui se forme le long de la paroi interne des obstacles aval 4 protège la paroi du flux chaud 1 sauf dans les régions où l'écoulement croise le flux froid 5 éjecté par les zones supérieure et inférieure du canal annulaire, comme le montre schématiquement la figure 2.

On obtient ainsi des zones chaudes 6 dont la position sur un obstacle est montrée schématiquement sur la figure 3.

Pour guider l'écoulement d'air froid le long de l'obstacle on propose de disposer des déflecteurs escamotables 12 sur les obstacles 4, selon le mode de réalisation de l'invention représenté sur les figures 4 à 6. Lors du fonctionnement de l'inverseur de poussée en jet direct, les déflecteurs 12 sont escamotés dans la paroi interne de l'obstacle 4 où ils sont rentrés dans les logements 17 ménagés à cet effet, de manière à ne pas perturber les écoulements aérodynamiques du flux. En configuration d'inversion de poussée, les déflecteurs 12 sont sortis, comme représentés sur la figure 5, et ils agissent sur l'écoulement le long de la paroi interne des obstacles 4 de manière à canaliser le flux froid en évitant l'impact du flux chaud sur les obstacles 4.

Chaque déflecteur 12 articulé sur l'obstacle 4 est commandé par une deuxième bielle "tire pousse" 13, elle même reliée à un renvoi 14, dont l'axe de rotation est fixé perpendiculairement à l'épaisseur de l'obstacle 4. La rotation du renvoi 14 est commandée par une première bielle "tire-pousse" 15. L'autre extrémité de cette première bielle 15 est reliée à un levier 16 fixe par rapport à la structure du turboréacteur et fixé sur l'axe de rotation des obstacles 4. Lorsque l'obstacle s'ouvre, son mouvement relatif par rapport au levier fixe 16 entraîne l'ensemble des bielles et renvois, amenant l'ouverture des déflecteurs 12 car le levier 16 tire sur la première bielle 15 qui fait tourner le renvoi 14, qui à son tour tire sur la deuxième bielle 13 qui actionne le déflecteur 12.

Le nombre et la position des déflecteurs est déterminé en fonction des contraintes d'encombrement et de leur efficacité à maintenir le matelas d'air froid.

Notamment, le nombre optimal, la taille, et la géométrie des déflecteurs escamotables sont déterminés en fonction des caractéristiques de l'ensemble propulsif, notamment de la pression totale et la géométrie de la porte, ainsi que de critères d'efficacité et d'encombrement.

Le dispositif d'ouverture et de fermeture des déflecteurs en variante du système mécanique lié à l'ouverture et la fermeture des portes, qui a été décrit en référence aux figures 4 à 6, peut être assuré par :
- un système actionné par un dispositif utilisant les forces aérodynamiques, par exemple : captation de la pression au point d'arrêt de l'inverseur en position déployée, utilisation du fait que l'écoulement s'inverse le long de la porte entre la position en vol et la position déployée...,
- un système automatique indépendant (mécanique ou hydropneumatique ou aéropneumatique),
- d'une manière générale, tout système d'action.

Les déflecteurs d'une même porte peuvent être ou non couplés ensemble dans leur mouvement, ce couplage pouvant être mécanique, par câble ou hydraulique.

Des systèmes de sécurité peuvent être adjoints, assurant l'impossibilité d'ouverture des déflecteurs 12 dans une configuration de poussée directe.

Ce mode de réalisation de l'invention à déflecteurs escamotables peut être utilisé sur des inverseurs à obstacle aval du type à pivots fixes ou du type à quatre barres et la protection des surfaces des obstacles et des déflecteurs en contact avec l'écoulement de réserve peut être complétée par un revêtement formant barrière thermique tel qu'une couche de céramique projetée.

## Revendications

1. Inverseur de poussée de turboréacteur à double flux comportant au moins deux obstacles aval (4) qui sont, en configuration de poussée directe, intégrés à la paroi externe et dans le prolongement du canal de turboréacteur et, en configuration d'inversion de poussée, placés sur le trajet des flux chaud et froid de manière à dévier les écoulements et inverser la poussée, lesdits obstacles (4) comportent des moyens de guidage aérodynamique d'une couche d'air froid entrant en contact avec ledit obstacle (4), constitués par des déflecteurs escamotables (12) disposés sur la face interne desdits obstacles aval (4) de telle sorte que, en configuration de poussée directe, les déflecteurs (12) sont rentrés dans un logement ménagé dans la paroi de l'obstacle de manière à ne pas perturber les écoulements aérodynamiques de flux et, en configuration d'inversion de poussée, lesdits déflecteurs (12) sont sortis et agissent sur l'écoulement le long de la paroi interne des obstacles (4), caractérisé en ce que les dimensions et la position desdits déflecteurs (12) sortis sont déterminées de manière à canaliser le flux froid en évitant l'impact du flux chaud sur lesdits obstacles (4) et en ce qu' un axe de rotation des obstacles (4) porte un levier (16) fixe par rapport à la structure du turboréacteur, relié à une première bielle (15) actionnant un renvoi (14) dont l'autre extrémité actionne une deuxième bielle (13) reliée audit déflecteur escamotable (12) de telle sorte que le déplacement de l'obstacle (4) entraîne celui desdits déflecteurs associés (12).

## Claims

1. A thrust reverser for a bypass turbojet engine comprising at least two obstacles (4) which, in forward thrust configuration, are incorporated into the outer wall and into the prolongation of the engine exhaust duct and, in reverse thrust configuration, are positioned in the path of the hot and cold flows so as to divert the flows and reverse the thrust, said obstacles (4) comprising means for aerodynamically guiding a cold air layer contacting said obstacle (4), said guide means consisting of retractable deflectors (12) disposed on the inner surface of said downstream obstacles (4) such that, in forward thrust configuration, the deflectors (12) are retracted into a recess in the wall of the obstacle so as not to disturb the aerodynamic flows, whereas, in thrust reversal configuration, the deflectors (12)are moved out of the recess and act on the flow along the inner wall of the obstacles (4), characterised in that the dimensions and position of said emerged deflectors (12) are so determined as to channel the cold flow and prevent the hot flow from striking said obstacles (4) and in that an axis of rotation of the obstacles (4) carries a lever (16) which is stationary relative to the engine structure and is connected to a first rod (15) actuating a bell crank (14) whose other end actuates a second rod (13) connected to said retractable deflector (12) so that the displacement of the obstacle (4) causes the displacement of the associated deflectors (12).

## Patentansprüche

1. Schubumkehrvorrichtung für Zweikreis-TL-Triebwerke mit mindestens zwei hinteren Klappen (4), die bei der Direktschub-Konfiguration in die Außenwand integriert und in der Verlängerung des Triebwerkkanals angeordnet sind und bei der Umkehrschub-Konfiguration in der Bahn des Primärstroms und des Mantelstroms dergestalt angeordnet sind, dass sie den Strahl ablenken und den Schub umkehren, wobei diese Klappen (4) Mittel zum aerodynamischen Leiten einer kalten, mit diesen Klappen (4) in Berührung eintretenden Luftschicht aufweisen, die aus ausklappbaren Strahlablenkern (12) bestehen, die an der Innenseite dieser hinteren Klappen (4) dergestalt angeordnet sind, dass die Strahlablenker (12) bei der Direktschub-Konfiguration in eine Aufnahme eingefahren werden, die in der Wand der Klappe dergestalt ausgeführt ist, dass sie die aerodynamischen Ströme nicht stören, und diese Strahlablenker (12) bei der Umkehrschub-Konfiguration ausgefahren sind und entlang der Innenwand der Klappen (4) auf die Strömung einwirken,
**dadurch gekennzeichnet,**
**dass** die Abmessungen und die Position dieser Strahlablenker (12) in ausgeklappter Stellung so bestimmt sind, dass sie den Mantelstrom kanalisieren und dabei das Auftreffen des Primärstroms auf die genannten Klappen (4) vermeiden, und dass auf einer Drehachse der Klappen (4) ein Hebel (16) sitzt, der gegenüber dem Aufbau des Triebwerks feststehend ist und mit einer ersten Stange (15) verbunden ist, die einen Umlenkhebel (14) betätigt, dessen anderes Ende eine zweite Stange (13) betätigt, die mit dem genannten ausklappbaren Strahlablenker (12) verbunden ist, so dass das Verschieben der Klappe (4) das Verschieben dieser zugehörigen Strahlablenker (12) bewirkt.
